Europäisches Patentamt

European Patent Office

Office européen des brevets

(19)

(11) Veröffentlichungsnummer: **0 256 126**
A1

(12)

# EUROPÄISCHE PATENTANMELDUNG

Veröffentlicht nach Art. 158 Abs. 3 EPÜ

(21) Anmeldenummer: 86902581.7

(22) Anmeldetag: 20.02.86

Daten der zugrundeliegenden internationalen Anmeldung:

(86) Internationale Anmeldenummer:
PCT/SU86/00015

(87) Internationale Veröffentlichungsnummer:
WO87/04956 (27.08.87 87/19)

(51) Int. Cl.³: **B 23 K 9/18**
**B 23 K 9/16**

(43) Veröffentlichungstag der Anmeldung:
24.02.88 Patentblatt 88/8

(84) Benannte Vertragsstaaten:
DE FR GB IT SE

(71) Anmelder: VSESOJUZNY
NAUCHNO-ISSLEDOVATELSKY
PROEKTNO-KONSTRUKTORSKY I TEKHNOLOGICHESKY
INST. ELEKTROSVAROCHNOGO OBORUDOVANIA
(VNIIESO)
ul. Litovskaja, 10
Leningrad, 194100(SU)

(72) Erfinder: IVANNIKOV, Alfred Vasilievich
Vasilievsky ostrov, 4 linia, 45-10
Leningrad, 199053(SU)

(74) Vertreter: Nix, Frank Arnold, Dr.
Kröckelbergstrasse 15
D-6200 Wiesbaden(DE)

(54) VERFAHREN ZUM ELEKTROSCHLACKEN-SCHWEISSEN.

(57) Das Lichtbogenschweißverfahren umfaßt die Zufuhr in die Schweißzone (1) einer abschmelzenden Hauptelektrode (4) aus mindestens einem Draht und einer abschmelzenden Zusatzelektrode (5) aus mindestens einem Draht (6, 7, 8), die sich mit der abschmelzenden Hauptelektrode (4) unter gleichem Potential befindet. Die Regelung des Schweißstroms, der Schweißnahtabmessungen und der Schweißnahtform wird nach der Größe der gesamten Querschnittsfläche der abschmelzenden Zusatzelektrode (5) vorgenommen. Danach wird der Krater am Ende der Schweißnaht (13) durch aufeinanderfolgendes Ausschalten der Drähte der abschmelzenden Haupt- und Zusatzelektroden (4, 5) verschweißt.

FIG.1

# LICHTBOGENSCHWEIßVERFAHREN

## Gebiet der Technik

Die vorliegende Erfindung bezieht sich auf das Gebiet des Elektroschweißens und betrifft insbesondere Lichtbogenschweißverfahren.

## Vorangehender Stand der Technik

Weit bekannt ist ein Lichtbogenschweißverfahren mit abschmelzender Elektrode, bei dem in die Schweißzone eine abschmelzende Elektrode, die einen Volldraht von rundem Querschnitt darstellt, zugeführt wird (Siehe z.B. "Technologie des Elektroschmelzschweißens von Metallen und Legierungen", 1974, herausgegeben von B.E.Paton (Moskau), S. 207 bis 211, Abb. 5 bis 50; S.475, Abb.9-6, Tabelle 9-9; "Metall-Schutzgasschweißen", 1974, von A.G. Potapievsky (Moskau), S.142, Abb. 55, S. 127, Abb.49). Als Schutzmedium werden verschiedene Schweißpulver oder Gase verwendet. Die Regelung des Schweißstroms, der Nahtabmessungen und der Nahtform sowie der Produktivität des Schweißprozesses erfolgt durch die Änderung der Vorschubgeschwindigkeit der abschmelzenden Elektrode in die Schweißzone und durch die Änderung der Schweißspannung.

Das Verschweißen des Kraters am Schweißnahtende wird durch die Steuerung der Vorschubgeschwindigkeit der abschmelzenden Elektrode und durch die Steuerung der Schweißspannung vorgenommen.

Bei dem bekannten Lichtbogenschweißverfahren wird die vorgegebene Einbrandtiefe des zu schweißenden Metalls in einem breiten Bereich der Betriebszustände der abschmelzenden Elektrode des gleichen Querschnitts leicht erzielt, aber, falls es erforderlich ist den Schweißstrom und die Produktivität des Schweißprozesses zu erhöhen sowie die Nahtabmessungen zu vergrößern (beispielsweise zum Schweißen metallischer Teile von großer Dicke ohne Kantenabschrägung und ohne Spalt im Stoß der zu schweißenden Teile), sollen die Vorschubgeschwindigkeit der abschmelzenden Elektrode in die Schweißzone und die Schweißspannung unbedingt erhöht werden. Dies führt zu einem Überverbrauch an Schweißwerkstoffen und Elektroenergie, zu vergrößerten Nahtabmes-

0256126

sungen sowie zur verschlechterten Form und Güte der Schweißnaht der zu schweißenden Teile.

Darüber hinaus führt die Notwendigkeit einer synchronen Schweißstrom- und Schweißspannungssteuerung zur erheblichen Erschwerung der Schweißausrüstung und zu verminderter Zuverlässigkeit. Beim Verschweißen des Kraters am Schweißnahtende wird auch eine komplizierte Ausrüstung verwendet, weil die Verschweißung des Kraters am Schweißnahtende durch die Steuerung der Vorschubgeschwindigkeit der abschmelzenden Elektrode und durch die Steuerung der Schweißspannung durchgeführt wird, was sich negativ auf der Schweißnahtgüte auswirkt.

Weit bekannt ist auch ein Lichtbogenschweißverfahren, bei dem in die Schweißzone eine abschmelzende Elektrode zugeführt wird, die aus zwei oder mehreren nicht isolierten, parallel zueinander angeordneten und an eine gemeinsame Schweißstromquelle angeschlossenen Drähten besteht (Siehe z.B. die GB-PS Nr.I280I47, IPK 83R). In die Schweißzone werden gleichzeitig sämtliche Drähte, aus denen die abschmelzende Elektrode besteht, zugeführt.

Die Regelung des Schweißstroms und der Produktivität des Schweißprozesses sowie der Schweißnahtabmessungen und -form erfolgt durch die Änderung der Vorschubgeschwindigkeit der abschmelzenden Elektrode in die Schweißzone sowie durch die Änderung der Schweißspannung.

Bei diesem Lichtbogenschweißverfahren wird die vorgegebene Einbrandtiefe des zu schweißenden Metalls leicht erzielt (Jeder Vorschubgeschwindigkeit der abschmelzenden Elektrode entsprechen der vorgegebene Schweißstrom und die Einbrandtiefe des zu schweißenden Metalls, die sich in diesem Fall direkt proportional dem Schweißstrom oder der Stromdichte in der abschmelzenden Elektrode ändert).

Dieses Lichtbogenschweißverfahren weist auch einen ernsthaften Nachteil auf, d.h., die Schmelzleistung der abschmelzenden Elektrode ändert sich stärker als die Einbrandtiefe des zu schweißenden Metalls, was sich aus der Formel ergibt:

$$Q = I^2 \cdot R \cdot t,$$

0 256126

worin Q - Wärmemenge, die sich in der freien Länge der
abschmelzenden Elektrode entwickel,

I - Schweißstrom,

R - Widerstand in der freien Länge der abschmelzenden Elektrode und

τ - Zeit des Schweißstromdurchflusses durch die
freie Länge der abschmelzenden Elektrode sind.

Dies führt zu einem Überverbrauch an Schweißwerkstoffen und Elektroenergie und verhindert, daß beim Lichtbogenschweißen mit zusammengesetzter abschmelzenden Elektrode
des gleichen Querschnitts eine Schweißnaht mit zufriedenstellenden Abmessungen und Form der Raupe in einem breiten Bereich der Verbindungsdicken der Schweißteile hergestellt werden kann. So sollen z.B. beim Lichtbogenschweißen von metallischen Teilen einer großen Dicke ohne
Abschrägung der Schweißkanten der Schweißstrom, die Vorschubgeschwindigkeit der zusammengesetzten abschmelzenden
Elektrode, die Schweißspannung erhöht werden.

Da die abschmelzende Elektrode intensiver schmilzt
als das Metall der Schweißteile durchschmilzt, entsteht
eine Schweißnaht mit einer übermäßig vergrößerten Schweißraupe, einer unzufriedenstellenden Querschnittsform und
einer verschlechterten Qualität. Dieser Nachteil des Verfahrens wird durch die vorhergehende Abschrägung der Schweißkanten behoben, wodurch der Arbeitsaufwand für die Herstellung eines Erzeugnisses oder einer Konstruktion beträchtlich ansteigt und die Produktivität des Schweißprozesses
sinkt. Das Verschweißen des Kraters am Schweißnahtende erfolgt durch Ausdehnen und nachfolgendes Ausschalten des
Lichtbogens. In diesem Lichtbogenschweißverfahren ist die
Herstellung von Schweißverbindungen mit veränderlichen
Kantenabmessungen nicht vorgesehen, weil z.B. mit der Vergrößerung des Spaltes im Stoß der herzustellenden Schweißverbindung der Bedarf an größerer Metallmenge der abschmelzenden Elektrode durch eine höhere Vorschubgeschwindigkeit
der zusammengesetzten abschmelzenden Elektrode gedeckt werden kann. Als Folge nimmt der Schweißstrom und proportional
dem Schweißstrom auch die Lichtbogenstromdichte zu. Dies

kann zu einem eventuellen Durchbrennen der Schweißteile führen.

Das vorliegende Verfahren ist mit einem Nachteil behaftet, der mit der Notwendigkeit einer synchronen Steuerung des Schweißstromes und der Schweißspannung verbunden ist, wodurch die Ausrüstungen bedeutend erschwert werden. Beim Verschweißen des Kraters am Schweißnahtende durch Ausdehnen des Bogens ergibt sich eine Schweißnaht von minderwertiger Qualität.

Offenbarung der Erfindung

Der vorliegenden Erfindung liegt die Aufgabe zugrunde, ein Lichtbogenschweißverfahren mit derartigen Betriebszuständen der abschmelzenden Elektrode zu schaffen, bei denen die Produktivität des Lichtbogenschweißprozesses erhöht und die Güte der Schweißausführung verbessert werden.

Dies wird dadurch erzielt daß bei einem Lichtbogenschweißverfahren, welches die Zufuhr einer abschmelzenden Hauptelektrode aus mindestens einem Draht in die Schweißzone, die Regelung des Schweißstroms, der Schweißnahtabmessungen und der Schweißnahtform sowie das Verschweißen des Kraters am Schweißnahtende umfaßt, erfindungsgemäß in die Schweißzone eine abschmelzende Zusatzelektrode aus mindestens einem Draht zugeführt wird, die unter gleichem Potential wie die abschmelzende Hauptelektrode steht, die Regelung des Schweißstroms, der Schweißnahtabmessungen und der Schweißnahtform nach der Größe der gesamten Querschnittsfläche der abschmelzenden Zusatzelektrode vorgenommen wird, wobei eine gleichbleibende Schweißspannung aufrechterhalten und die Verschweißung des Kraters am Schweißnahtende durch aufeinanderfolgendes Ausschalten der Drähte der abschmelzenden Haupt- und Zusatzelektroden durchgeführt wird.

Die Querschnittsfläche jedes der Drähte der abschmelzenden Zusatzelektrode wird zweckmäßigerweise zur Verbesserung der Güte der Lichtbogenschweißausführung gleich oder kleiner als die Querschnittsfläche der abschmelzenden Hauptelektrode gewählt.

Der Einsatz des erfindungsgemäßen Lichtbogenschmelzverfahrens gestattet es, die Produktivität des Lichtbogenschweißprozesses zu erhöhen und die Güte der Lichtbogenschweißausführung zu verbessern, den Verbrauch an Schweißwerkstoffen und Elektroenergie zu reduzieren sowie eine
einfachere Schweißausrüstung zu verwenden.

Kurze Beschreibung der Zeichnungen

Nachstehend wird die vorliegende Erfindung durch eine
ausführliche Beschreibung des Lichtbogenschweißverfahrens
unter Bezugnahme auf die beiliegenden Zeichnungen näher
erläutert, in denen es zeigt:

Fig. 1 ein Schema für die Durchführung des erfindungsgemäßen Lichtbogenschmelzverfahrens (in Seitenansicht);

Fig. 2 Schweißteile (in Draufsicht), gemäß der Erfindung.

Beste Durchführungsform der Erfindung

Das erfindungsgemäße Lichtbogenschweißverfahren besteht in folgendem.

Vor Beginn des Lichtbogenschweißvorgangs wird in die
Schweißzone I mittels Rollen 2 einer Vorschubvorrichtung 3
eine abschmelzende Hauptelektrode 4 zugeführt, die aus
einem Draht besteht.

Die abschmelzende Hauptelektrode 4 kann aus mehreren
Drähten bestehen.

Dann wird in die Schweißzone I eine abschmelzende
Zusatzelektrode 5 zugeführt, die aus Drähten 6, 7, 8 besteht.

Die abschmelzende Hauptelektrode 4 und die abschmelzende Zusatzelektrode 5 werden durch eine Stromzuführungseinrichtung 9 durchgeführt, wodurch sie unter gleichem
Potential stehen.

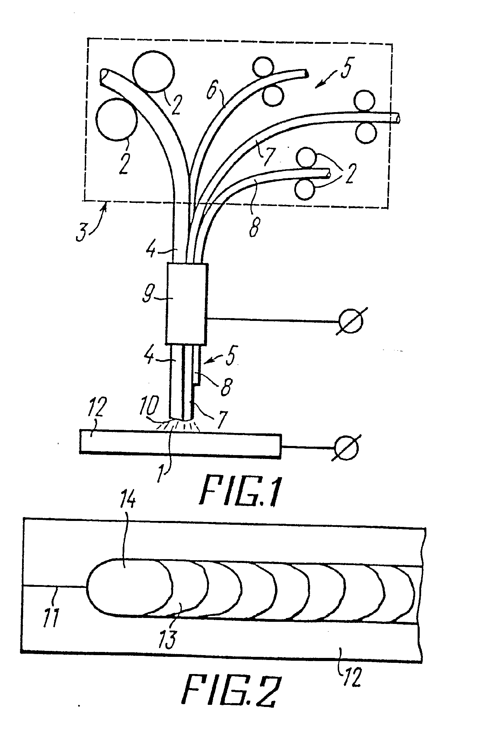

Das Stirnende 10 der abschmelzenden Hauptelektrode 4,
unabhängig von deren Ausführung und Form, wird symmetrisch
über der Stoßlinie II (Fig. 2) eines Schweißteils 12 angeordnet.

Die Anzahl der Drähte 6, 7, 8 (Fig.1) der abschmelzenden Zusatzelektrode 5 und die gesamte Querschnittsfläche
dieser Drähte 6,7,8 werden je nach der verfahrenstechnischen Aufgabestellung und Schweißstromwerten gewählt, in deren Grenzen der Schweißstrom geregelt wird.

BAD ORIGINAL

Danach wird ein Lichtbogen gezündet und mit dem Lichtbogenschweißen unter Bildung einer Schweißnaht 13 (Fig.2) am Schweißteil 12 begonnen. Zu einer besseren Zündung des Lichtbogens wird das Lichtbogenschweißen mit der Berührung der Oberfläche des Schweißteils 12 durch einen der Drähte der abschmelzenden Hauptelektrode 4 (Fig.1) oder der abschmelzenden Zusatzelektrode 5, vorzugsweise durch einen Draht mit der kleinsten Querschnittsfläche, begonnen. Der Lichtbogenschweißvorgang wird beendet, wenn der Krater 14 (Fig. 2) am Ende der Schweißnaht 13 verschweißt wird. In Abhängigkeit von dem Lichtbogenschweißparametern, der Querschnittsfläche der abschmelzenden Hauptelektrode 4 (Fig.1) und der abschmelzenden Zusatzelektrode 5 und in Abhängigkeit von der verfahrenstechnischen Aufgabestellung wird das Verschweißen des Kraters 14 (Fig. 2) am Ende der Schweißnaht 13 durch Ausschalten des Drahtvorschubs der abschmelzenden Hauptelektrode 4 (Fig. 1) und der abschmelzenden Zusatzelektrode 5 in einer Reihenfolge vorgenommen, die eine erforderliche Geschwindigkeit der Schweißstromabnahme gewährleistet. Im Ergebnis wird eine Naht 13 (Fig. 2) mit einem völlig verschweißten Krater 14 am Schweißnahtende hergestellt.

Beim Einstellen des Schweißapparats auf das Lichtbogenschweißen von metallischen Teilen in einem breiten Dickenbereich wird eine solche Anzahl der Drähte der abschmelzenden Haupt- und Zusatzelektroden 4, 5 (Fig.1) verwendet, deren gesamte Querschnittsfläche die Erzeugung des maximalen, zum Lichtbogenschweißen von metallischen Teilen der größten Dicke erforderlichen Schweißstromes gewährleistet.

Die kleinste Dicke der metallischen Schweißteile wird für die Bezugsgröße angenommen und in Abhängigkeit von dem für das Schweißen der metallischen Teile dieser Dicke erforderlichen Schweißstromwert wird die erforderliche Querschnittsfläche der abschmelzenden Hauptelektrode 4 festgelegt. Je nach dem Durchmesser der zum Einsatz kommenden Drähte wird die abschmelzende Hauptelektrode 4 aus einem oder mehreren Drähten zusammensetzt.

Während des Schweißens der metallischen Teile, deren Dicke die Bezugsgröße übersteigt, wird die gesamte Querschnittsfläche der abschmelzenden Hauptelektrode 4 nicht geändert, die gesamte Querschnittsfläche der abschmelzenden Zusatzelektrode 5 wird in Abhängigkeit von dem für das Schweißen von Schweißteilen 12 einer großen Dicke erforderlichen Schweißstromwert vergrößert.

Im Falle wenn ein metallisches Teil 12 mit erheblichen Schwankungen der Spaltgröße im Stoß II der Schweißteile 12 (Fig. 2) oder des Öffnungswinkels, oder ein Schweißteil 12 mit Kantenabschrägung (in der Zeichnung nicht gezeigt) geschweißt werden muß, wird der Schweißapparat wie oben beschrieben eingestellt. Vor Beginn des Schweißens einer solchen Verbindung der Schweißteile 12 wird der Wert der Spaltgrößeschwankungen im Stoß II der Schweißteile 12 eingeschätzt und durch die Stromzuführungseinrichtung 9 (Fig.1) eine solche Anzahl der Drähte der abschmelzenden Haupt- und Zusatzelektroden 4, 5 durchgeführt, deren gesamte Querschnittsfläche ein normales Ausfüllen der Zone der Schweißverbindung der Schweißteile 12 mit dem größten Spalt im Stoß II (Fig. 2) und die Herstellung einer vollständig geschweißten Naht 13 gewährleistet.

Wenn am Anfang des Stoßes II das Schweißteil 12 einen Spalt in den zulässigen Wertgrenzen hat, wird in die Schweißzone I (Fig. 1) nur die abschmelzende Hauptelektrode 4 zugeführt, deren Querschnittsfläche den erforderlichen Schweißstromwert sichert. Weiter wird während des Schweißvorganges je nach der Vergrößerung des Spaltes im Stoß II (Fig. 2) und dementsprechend je nach dem zunehmenden Bedarf an dem aufzuschweißenden Elektrodenmetall die Querschnittsfläche der abschmelzenden Zusatzelektrode 5 (Fig.1) durch Erhöhung der Anzahl der zugeführten Drähte der abschmelzenden Zusatzelektrode 5 vergrößert.

Das Anwachsen des Schweißstromwertes während des Schweißvorganges erhöht das Durchschmelzvermögen des Lichtbogens nicht und ist hauptsächlich auf die Erhöhung an des Bedarfs der abschmelzenden Haupt- und Zusatzelektroden 4,5

gerichtet, weil sich die Stromdichte im Schweißbogen mit zunehmender Querschnittsfläche der abschmelzenden Zusatzelektrode 5 während des Schweissvorganges nicht ändert oder in manchen Fällen sogar sinkt. Deswegen wird an den Schweißverbindungsstellen des Schweißteils 12 mit dem größten Spalt im Stoß II (Fig. 2) ein solcher verbreiteter Schweißfehler wie ein durchgehendes Durchbrennen des Schweißteils 12 ausgeschlossen.

Mit der Verringerung des Spaltes im Stoß II wird die gesamte Querschnittsfläche der abschmelzenden Zusatzelektrode 5 (Fig. 1) durch Reduzierung der Anzahl der am Lichtbogenschweißen beteiligten Drähte 6,7,8 entsprechend verringert.

Um eine zügige Einführung eines Zusatzmetalls in die Schweißnaht 13 (Fig. 2) durch Zufuhr der Drähte 6,7,8 der abschmelzenden Zusatzelektrode 5 (Fig. 1) ohne schroffe Änderungen des Schweißstroms und Störung des stabilen Verlaufs des Schweißvorgangs sicherstellen zu können, muß die Querschnittsfläche jedes der zuzuführenden Elektrodendrähte der abschmelzenden Zusatzelektrode 5 möglichst klein sein und die Querschnittsfläche des Drahts der abschmelzenden Hauptelektrode 4 nicht übersteigen.

Der Drahtvorschub der abschmelzenden Hauptelektrode 4 und der abschmelzenden Zusatzelektrode 5 kann durch Vorschubsvorrichtungen mit einem gemeinsamen Antrieb oder mit separaten Antrieben erfolgen.

Die Querschnittsform der verwendeten Drähte der abschmelzenden Haupt- und Zusatzelektroden 4,5 kann rund oder nicht rund sein. Gleichzeitig können sich am Schweissvorgang Drähte der abschmelzenden Haupt- und Zusatzelektroden 4,5 beteiligen, die unterschiedliche Querschnittsformen und Ausführungen haben.

Beispiel 1.

Es wurden beiderseitige Stoßverbindungen aus einem niedriglegierten Stahl mit einer Dicke von 16, 12, 8 und 4 mm nach dem UP-Schweißverfahren mit Nahtfugenbearbeitung ohne Kantenabschrägung und ohne Spalt im Stoß hergestellt.

Die Schweißdaten, die Kennwerte der Elektroden 4,5 und

</>

die Abmessungen der hergestellten Schweißraupen sind in der Tabelle 1 angeführt.

Nach dem Schweißen der genannten Stoßverbindungen von der einen Seite wurden diese gekantet und bei den gleichen Schweißdaten von der Rückseite geschweißt.

Im Ergebnis sind die Stoßverbindungen im gesamten Dickenbereich von 16 bis 4 mm durch Schweißnähte hoher Güte mit einem günstigen Formfaktor der Schweißraupe (Nahtbreite/Nahtüberhöhung-Verhältnis) an allen Fugen geschweißt, was von einem sehr rationellen Verbrauch an Metall der Abschmelzelektrode und an Elektroenergie (siehe Tabelle 1) zeugt. Die Nähte wiesen keine äußeren und inneren Fehler auf.

Beispiel 2.

Es wurde eine Stoßverbindung aus einem kohlenstoffarmen Stahl von 14 mm dick mit V-Nahtvorbereitung unter Bildung der Schweißnaht von der Unterseite auf einer Schweißpulver-Kupferunterlage durch Schweißen hergestellt. Die Stoßlänge betrug 1000 mm.

Die Verbindung wurde schweißbereit so zusammengebaut, daß die Querschnittsfläche der Fuge von deren Anfang zu dem Ende um 30 % zunahm.

Das Schweißen an dieser Verbindung wurde mit der Zündung eines Lichtbogens durch Berührung des Schweißteils mit einem der Drähte der abschmelzenden Zusatzelektrode (zur Erleichterung der Lichtbogenzündung) begonnen, und dann wurde der Vorschub der abschmelzenden Hauptelektrode und die Bewegung des Lichtbogens über den Stoß eingeschaltet. Jede 250 mm Länge der Verbindung wurde der Vorschub der Schweißdrähte der abschmelzenden Zusatzelektrode (je eines) so eingeschaltet, daß auf dem letzten Abschnitt der Verbindung alle vier Drähte (die abschmelzende Hauptelektrode und drei Drähte der abschmelzenden Zusatzelektrode) am Schweißen beteiligt waren.

Schweißdaten:

Durchmesser der abschmelzenden Hauptelektrode, mm... 3
Durchmesser der Schweißdrähte der abschmelzenden
Zusatzelektrode, mm ......................................... 1,6

Schweißstrom der Hauptelektrode, A ........ 900
Schweißstrom der Hauptelektrode plus ein
Draht der Zusatzelektrode, A...................... 1000
Schweißstrom der Hauptelektrode plus zwei
Drähte der Zusatzelektrode, A................... 1100
Schweißstrom der Hauptelektrode plus drei
Drähte der Zusatzelektrode, A................. 1200
Lichtbogenspannung, V...................... 40
Geschwindigkeit des Schweißens, m/h........ 25

Im Ergebnis wurde eine gleichmäßig über die gesamte Länge ausgefüllte Schweißnaht mit einer form- und maßgerechten Überhöhung ohne äußere und innere Fehler durch Schweißen hergestellt.

Als Schweißstromquellen in den oben angeführten Beispielen wurden zwei parallelgeschaltete serienmäßig hergestellte Schweißgleichrichter benutzt.

Durch Verwendung der vorliegenden Erfindung kann auf das weit verbreitete und wenig wirksame Verfahren zur Regelung des Schweißstroms, der Schweißnahtabmessungen und der Produktivität des Schweißprozesses verzichtet werden, indem die Regelung der Vorschubgeschwindigkeit der Elektrode und der Schweißspannung vorgenommen wird; diese Prozeßparameter können bei unveränderlicher Schweißspannung operativ gesteuert und der Verbrauch an Schweißwerkstoffen und Elektroenergie um ein Dreifaches und mehr (je nach der Kantenausbildung des Schweißteils) gesenkt werden.

Das erfindungsgemäße Lichtbogenschweißverfahren erlaubt eine einfachere und leichtere Verschweißung des Kraters am Schweißnahtende und gewährleistet eine hohe Schweißnahtgüte, was beim Schweißen von Erzeugnissen und Konstruktionen mit Rundschweißnähten oder Schlußschweißnähten eines anderen Typs von grosser Bedeutung ist.

Das erfindungsgemäße Lichtbogenschweißverfahren ermöglicht es, das Steuerungsschema für den Schweißvorgang zu vereinfachen und seine Zuverlässigkeit zu erhöhen.

Durch die Verwendung einer abschmelzenden Elektrode mit vergrößerter gesamter Querschnittsfläche kann beim Schweißen mit sehr niedrigen Spannungen und höheren Schweißgeschwindigkeiten gearbeitet werden. Niedrige Schweißspannungen (bis 36 V bei einem beliebigen Schweißstromwert), welche zudem beim Schweißen von metallischen Teilen einer beliebigen Dicke nicht geregelt werden müssen, gestatten es ihrerseits, Schweißstromquellen zu benutzen, die vom konstruktiven Standpunkt aus einfacher und im Vergleich zu den weit verwendeten Konstruktionen um ein 1,5 bis 2faches weniger materialaufwendig sind. Zugleich kann das Verfahren auch bei höheren Schweißspannungen mit der Lichtbogenspeisung von den beim Schweißen üblich verwendeten Schweißstromquellen erfolgreich verwendet werden.

Industrielle Anwendbarkeit

Die Erfindung kann beim UP-Lichtbogenschweißen von metallischen Teilen und Konstruktionen beim Metall-Schutzgas- und Mischgasschweißen unter Verwendung von Voll- und Pulverdrähten sowie unter Einsatz von Sonderdrähten ohne Schweißpulver und Schutzgase im chemischen und Energiemaschinenbau, im Schiffsbau, im Schwermaschinenbau Anwendung finden.

Tabelle 1

| lfd. Nr. | Metall-dicke, mm | Durchmesser der abschmelzen-den Haupt-elektrode, mm | Durchmesser der Drähte der abschmelz-enden Zusatz-elektrode, mm | Anzahl der Drähte in der abschmelz-enden Zusatz-elektrode |
|---|---|---|---|---|
| 1 | 2 | 3 | 4 | 5 |
| 1 | 16 | 4 | 4 | 3 |
| 2 | 12 | 4 | 4 | 2 |
| 3 | 8 | 4 | 4 | 1 |
| 4 | 4 | 4 | – | – |

Tabelle 1 (Fortsetzung)

| lfd. Nr. | Schweiß-strom, A | Lichtbo-genspan-nung, V | Schweißge-schwindig-keit, m/h | Schweißraupen-abmessungen mm | |
|---|---|---|---|---|---|
| | | | | Breite | Höhe |
| 1 | 6 | 7 | 8 | 9 | 10 |
| 1 | 2600 | 33 | 100 | 23 | 2,5 |
| 2 | 2000 | 33 | 100 | 20 | 2,2 |
| 3 | 1400 | 33 | 100 | 16 | 2,0 |
| 4 | 800 | 33 | 100 | 10 | 1,6 |

PATENTANSPRÜCHE

1. Lichtbogenschweißverfahren, welches die Zufuhr einer abschmelzenden Hauptelektrode (4) aus mindestens einem Draht in die Schweißzone (1), die Regelung des Schweißstroms, der Abmessungen und der Form der Schweißnaht und das Verschweißen des Kraters am Schweißnahtende umfaßt, d a - d u r c h   g e k e n n z e i c h n e t, daß in die Schweißzone (1) eine abschmelzende Zusatzelektrode (5) aus mindestens einem Draht (6, 7, 8) zugeführt wird, die unter gleichem Potential wie die abschmelzende Hauptelektrode (4) steht, die Regelung des Schweißstroms, der Abmessungen und der Form der Schweißnaht nach der Größe der gesamten Querschnittsfläche der abschmelzenden Zusatzelektrode (5) vorgenommen wird, wobei eine gleichbleibende Schweißspannung aufrechterhalten und die Verschweißung des Kraters am Ende der Schweißnaht (13) durch aufeinanderfolgendes Ausschalten der Drähte der abschmelzenden Haupt- und Zusatzelektroden (4, 5) durchgeführt wird.

2. Lichtbogenschweißverfahren nach Anspruch 1, d a - d u r c h   g e k e n n z e i c h n e t, daß die Querschnittsfläche jedes der Drähte (6, 7, 8) der abschmelzenden Zusatzelektrode (5) gleich oder kleiner als die Querschnittsfläche der abschmelzenden Hauptelektrode (4) gewählt wird.

FIG.1

FIG.2

# INTERNATIONAL SEARCH REPORT

International Application No PCT/SU86/00015

0256126

**I. CLASSIFICATION OF SUBJECT MATTER (if several classification symbols apply, indicate all)**

According to International Patent Classification (IPC) or to both National Classification and IPC

IPC⁴    B 23 K 9/18, 9/16

**II. FIELDS SEARCHED**

Minimum Documentation Searched

| Classification System | Classification Symbols |
|---|---|
| IPC⁴ | B 23 K 9/00, 9/12, 9/16, 9/18 |

Documentation Searched other than Minimum Documentation
to the Extent that such Documents are Included in the Fields Searched

**III. DOCUMENTS CONSIDERED TO BE RELEVANT**

| Category | Citation of Document, with indication, where appropriate, of the relevant passages | Relevant to Claim No. |
|---|---|---|
| A | SU, A1, 504612 (Chelyabinsky ordena Lenina truboprokatny zavod), 3 May 1976 (03.05.76), see the claims | 1,2 |
| A | US, A, 4013868 (Nippon Kokan Kabushiki Kaisha) 22 March 1977 (22.03.77), see the claims | 1,2 |
| A | GB, A, 1579607 (MANNESMANN AKTIENGESELLSCHAFT) 19 November 1980 (19.11.80), see the claims | 1 |
| A | JP, A, 52-143943 30 November 1977 (30.11.77), see the claims , figure 1 | 2 |
| A | JP, A, 55-22460 18 February 1980 (18.02.80), see the claims | 1 |
| A | GB, A, 1517812 (NIPPON KOKAN KABUSHIKI KAISHA) 12 July 1978 (12.07.78), see the claims | 1 |

* Special categories of cited documents: 10

"A" document defining the general state of the art which is not considered to be of particular relevance

"E" earlier document but published on or after the International filing date

"L" document which may throw doubts on priority claim(s) or which is cited to establish the publication date of another citation or other special reason (as specified)

"O" document referring to an oral disclosure, use, exhibition or other means

"P" document published prior to the International filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 18 July 1986 (18.07.86) | 5 November 1986 (05.11.86) |
| International Searching Authority | Signature of Authorized Officer |
| ISA/SU | |

Form PCT/ISA/210 (second sheet) (January 1985)